# EUROPÄISCHE PATENTANMELDUNG

(11) **EP 0 744 381 A1**
(43) Veröffentlichungstag der Anmeldung: **27.11.1996**
(21) Anmeldenummer: 96107723.7
(22) Anmeldetag: 15.05.1996
(51) Int. Cl.: C01G 45/00, H01M 4/50

(54) **Lithium and Mangan-(III/IV) enthaltende Spinelle**

(30) Priorität: 24.05.1995 DE 19519044
(71) Anmelder: BASF Magnetics GmbH, 67059 Ludwigshafen (DE)
(72) Erfinder: Dausch, Wilma M., Dr., 67117 Limburgerhof (DE); Cimniak, Thomas, Dr., 68259 Mannheim (DE); Schlösser, Wilhelm, 67549 Worms (DE)
(74) Vertreter: Karau, Wolfgang, Dr.

(57) **Zusammenfassung**

Lithium und Mangan-/III/IV) enthaltende Spinelle mit einer spezifischen Oberfläche von 0,1 bis 4 m²/g.

Solche Spinelle können als Kathodenmaterial in elektrochemischen Zellen verwendet werden.

## Beschreibung

Die vorliegende Erfindung betrifft Lithium und Mangan-(III/IV) enthaltende Spinelle mit einer speziofischen Oberfläche von 0,1 bis 4 m²/g.

Ferner betrifft die Erfindung die Verwendung dieser Spinelle als Kathodenmaterial für elektrochemische Zellen sowie elektrochemische Zellen, welche diese Spinelle als Kathodenmaterial enthalten.

Lithium und Mangan-(III/IV) enthaltende Spinelle und die Verwendung als Kathodenmaterial in elektrochemischen Zellen sind allgemein bekannt, z.B. aus DE-A 4328755.

Im stöchiometrisch einfachsten Fall LiMn₂O₄ liegt in diesen Spinellen das Mangan in einer mittleren Oxidationsstufe von 3,5 vor.

Mit Verbindungen, die Lithiumkationen in ihr Gitter einbauen können wie Graphit, reagieren diese Spinelle reversibel unter Ausbau der kleinen Lithiumatome aus dem Kristallgitter, wobei in diesem Mangan-III-ionen zu Mangan-IV-ionen oxidiert werden. Diese Reaktion läßt sich in einer elektrochemischen Zelle zur Stromspeicherung nutzen, indem man die Lithium-Ionen aufnehmende Verbindung (Anodenmaterial), und den Managanspinell durch einen Elektrolyten trennt, durch welchen die Lithiumkationen aus dem Spinell in das Anodenmaterial wandern.

Zur Aufladung der Zelle fließen Elektronen durch eine äußere Spannungsquelle und Lithiumkationen durch den Elektrolyten zum Anodenmaterial. Bei der Nutzung der Zelle fließen die Lithiumkationen durch den Elektrolyten, die Elektronen hingegen durch einen Nutzwiderstand vom Anodenmaterial zum Spinell.

Für diese Reaktion kommt aber nicht nur der Spinell LiMn₂O₄ in Betracht, sondern auch, wie allgemein bekannt ist, Spinelle mit weiteren Metallkationen und abweichenden Wertigkeiten.

Weitere Metalle A sind beispielsweise Kobalt oder Nickel, welche das Mangan und das Lithium im Gitter zum Teil ersetzen oder welche auch zusätzlich in das Gitter eingebaut sein können. Durch diese Kationen A können die elektrischen Eigenschften einer Li-Mn-Zelle abgewandelt werden, z.B. hinsichtlich der Spannung und des Spannungsabfalls.

Die genannten Spinellen nach dem Stand der Technik weisen alle eine geringe Schüttdichte bzw. Packungsdichte auf, die sich insbesondere beim Transport nachteilig auswirkt. Ferner führt die geringe Packungsdichte nur zu unbefriedigenden volumenspezifischen Ladungsdichten.

Der Erfindung lag daher die Aufgabe zugrunde, den genannten Nachteilen abzuhelfen.

Demgemäß wurden die obengenannten Spinelle, ihre Verwendung für elektrochemische Zellen sowie elektrochemische Zellen gefunden, welche sie als Kathodenmaterial enthalten.

Die Herstellung der Spinelle erfolgt durch Umsetzung einer Lithiumverbindung, einer Manganverbindung und gegebenenfalls einer weiteren Metallverbindung bei erhöhten Temperaturen.

Als Lithiumverbindung können Lithiumoxid oder Substanzen eingesetzt werden, die sich unter Reaktionsbedingungen in Lithium enthaltende Oxide zersetzen, wie anorganische Lithiumsalze, beispielsweise Lithiumnitrat, Lithiumhydroxid oder vorzugsweise Lithiumcarbonat, organische Lithiumverbindungen wie Lithiumcarboxylate, beispielsweise Lithiumoxalat, Lithiumlaurat, Lithiumtartrat oder vorzugsweise Lithiumacetat, oder Lithium enthaltende Komplexverbindungen, wie Lithiumacetylacetonat. Auch Mischungen solcher Verbindungen sind geeignet.

Als Manganverbindungen kommen Substanzen in Betracht, die sich unter den Reaktionsbedingungen zu Mangan-(III/IV) enthaltenden Oxiden umsetzen, wie anorganische Mangansalze, beispielsweise Mangan-II-hydroxid, Mangan-III-hydroxid, Mangan-IV-hydroxid, Mangan-II-nitrat, oder vorzugsweise Mangan-II-carbonat oder Manganoxide, organische Manganverbindungen wie Mangancarboxylate, beispielsweise Mangan-II-acetat, Mangan-III-acetat, Mangan-II-tartrat, Mangan-II-citrat oder Mangan-II-oxalat, Mangan enthaltende Komplexverbindungen, beispielsweise Mangan-II-acetylacetonat oder Mischungen solcher Verbindungen.

Es können auch Lithium und Mangan enthaltende Mischverbindungen eingesetzt werden, wie sie in an sich bekannter Weise z.B. aus einer eine Lithium- und eine Manganverbindung enthaltenden Lösung durch gemeinsame Fällung oder Entfernung des Lösungsmittels, beispielsweise durch Destillation oder Sprühtrocknung, erhalten werden können. Ferner können auch Mischprodukte, wie sie beispielsweise durch Umsetzung einer eine Lithiumverbindung enthaltenden Lösung mit einer in dem betreffenden Lösungsmittel unlöslichen Manganverbindung bzw. Umsetzung einer eine Manganverbindung enthaltenden Lösung mit einer in dem betreffenden Lösungsmittel unlöslichen Lithiumverbindung und anschließendem Entfernen des Lösungsmittels, beispielsweise durch Destillation oder Sprühtrocknung, erhalten werden können.

Geht man, wie es bevorzugt ist, von Verbindungen des zweiwertigen Mangans aus, ist die Mitverwendung von Sauerstoff enthaltenden Oxidationsmitteln erforderlich, etwa von Mangandioxid (Braunstein) oder am einfachsten von Luft. Setzt man hingegen eine höherwertige Manganverbindung ein, so verwendet man zweckmäßigerweise eine entsprechende Menge einer Mn-II-Verbindung oder ein Reduktionsmittel wie Kohlenmonoxid mit oder stellt die ManganWertigkeit am einfachsten mittels des Sauerstoffpartialdrucks eines Sauerstoff enthaltenden Gases ein.

Soll der Spinell Heteroatome enthalten, so setzt man die entsprechenden Mengen von Oxiden oder Salzen dieser Metalle mit. Insbesondere entsprechen die erfindungsgemäßen Spinelle vorzugsweise der Formel I

Liₓ (Mnⁿ)₂ A_{y} O_{z} I

in der die Variablen folgende Bedeutung haben:
- x: 0,5 bis 1,6
- n: die mittlere Oxidationsstufe des Mangans im Bereich 3,5 bis 4,0
- A: das Äquivalent eines Metallkations
- y: 0 bis 0,4
- z: die sich aus der Menge der übrigen Komponenten ergebenden Sauerstoffäquivalente

Als Metalläquivalente A kommen vor allem diejenigen des Kobalts und des Nickels in Betracht. Man setzt sie vorzugsweise in oxidischer Form oder in Form von Salzen mit den gleichen Anionen wie die Lithium- und Mangansalze ein. Auch Mischungen solcher Verbindungen sind geeignet.

Die Reaktion wird bei Temperaturen von 200 bis 800°C, vorzugsweise 300 bis 750°C, insbesondere 400 bis 750°C durchgeführt, wobei sich Reaktionszeiten von 0,5 bis 100, vorzugsweise 0,5 bis 10, insbesondere 1 bis 4 Stunden ergeben.

Zur Durchführung des Verfahrens kann man bekannte Apparaturen verwenden, in denen man Feststoffreaktionen vornimmt. Näheres zu diesen Reaktionsapparturen, die mit den erforderlichen Heizeinrichtungen versehen sein müssen, ist z.B. Ullmann's Encyclopedia of Industrial Chemistry, 5. Ed., VCH Verlagsgesellschaft mbH, Weinheim, 1992, Vol. B4, S. 107-111 zu entnehmen, so daß sich weitere Ausführungen hierzu erübrigen.

Durch geeignete Wahl der Reaktionsbedingungen und der Ausgangsstoffe können nach dem beschriebenen Verfahren Spinelle mit vorteilhaften geringen spezifischen Oberflächen erhalten werden. Die Reaktionsbedingungen zur Einstellung der optimalen Oberfläche lassen sich leicht durch einige einfache Vorversuche ermitteln.

Für die Verwendung der Spinelle als Kathodenmaterial in elektrochemischen Zellen sind zur Erzielung eines guten Zyklisierverhaltens röntgenographisch einphasige Produkte erwünscht, wobei man unter dem Zyklisierverhalten den reversiblen elektrochemischen Ein- bzw. Ausbau von Lithium-Ionen in das Spinell-Gitter bzw. aus dem Spinell-Gitter unter Ausgleich der Ladung durch Änderung der Oxidationsstufe des Mangans oder gegebenenfalls vorhandenen weiteren Metallionen versteht.

Derartige Produkte lassen sich vorteilhaft durch ein atomares Verhältnis von Lithium zu Mangan von 0,5 zu 2 bis 1,6 zu 2, vorzugsweise 0,8 zu 2 bis 1,3 zu 2, insbesondere 0,9 zu 2 bis 1,2 zu 2, erhalten und weisen üblicherweise eine Kapazität von 100 bis 140 mAh/g auf.

Zur Herstellung des Kathodenmaterials werden die Spinelle in an sich bekannter Weise verarbeitet.

In elektrochemischen Zellen kann dieses Kathodenmaterial in an sich bekannter Weise gegen eine Lithiumkationen aufnehmende Anode eingesetzt werden.

Als Elektrolyt kommen die üblichen organischen Verbindungen, bevorzugt Ester wie Ethylencarbonat und Propylencarbonat, oder Mischungen solcher Verbindungen in Betracht.

Derartige elektrochemische Zellen liefern in der Regel eine Spannung von 3,5 bis 4,5 V.

Die spezifische Oberfläche der Spinelle wurde nach DIN 66132 mittels eines Ströhlein-Areameters (Firma Ströhlein, Düsseldorf) bestimmt.

### Beispiel

In einem Drehrohr mit einem Innendurchmesser von 55 mm und einer auf 675°C beheizten Länge von 700 mm, das zur Durchmischung des Reaktionsgemisches mit einer statischen Förderschnecke mit Stegen versehen war, wurde eine Mischung aus Lithiumcarbonat, Lithiumacetat (Molverhältnis 1,5:1,0) und Mangancarbonat mit einem Atomververhältnis Li:Mn von 1,08:2,00 unter einer Luftzufuhr von 200 1/Stunde umgesetzt. Die Drehzahl des Rohres wurde so geregelt, daß die Verweilzeit des Reaktionsgemisches in der beheizten Zone 2 Stunden betrug.

Der Spinell besaß eine spezifische Oberfläche von 1,9 m²/g.

Mit dem Spinell ließen sich elektrochemische Zellen mit hervorragenden elektrochemischen Eigenschaften herstellen.

## Patentansprüche

1. Lithium und Mangan-(III/IV) enthaltende Spinelle mit einer spezifischen Oberfläche von 0,1 bis 4 m²/g.

2. Spinelle nach Anspruch 1 der Formel I
Liₓ (Mnⁿ)₂ A_{y} O_{z} I
in der die Variablen folgende Bedeutung haben:
x 0,5 bis 1,6
n die mittlere Oxidationsstufe des Mangans im Bereich 3,5 bis 4,0
A das Äquivalent eines Metallkations
y 0 bis 0,4
z die sich aus der Menge der übrigen Komponenten ergebenden Sauerstoffäquivalente

3. Verwendung der Spinelle gemäß Anspruch 1 oder 2 als Kathodenmaterial für elektrochemische Zellen.

4. Elektrochemische Zellen, enthaltend als Kathodenmaterial einen Spinell gemäß Anspruch 1 oder 2.
